# EUROPEAN PATENT SPECIFICATION

(11) **EP 1 837 969 B1**
(45) Date of publication and mention of the grant of the patent: **11.01.2012**
(21) Application number: 05806918.8
(22) Date of filing: 15.11.2005
(51) Int. Cl.: H02G 1/14, H01B 13/00, H02G 15/24

(54) **METHOD FOR ASSEMBLING SUPERCONDUCTING CABLE CONNECTING SECTION**
VERFAHREN ZUM ZUSAMMENBAU EINES VERBINDUNGSTEILS FÜR SUPRALEITENDES KABEL
PROCEDE D'ASSEMBLAGE DE SECTION DE CONNEXION DE CABLE SUPRACONDUCTEUR

(30) Priority: 12.01.2005 JP 2005005712
(43) Date of publication of application: 26.09.2007
(73) Proprietor: Sumitomo Electric Industries, Ltd., Osaka-shi, Osaka 541-0041 (JP)
(72) Inventor: ASHIBE, Yuuichi, c/o Osaka Works of Sumitomo, Konohana-ku, Osaka-shi, Osaka (JP)
(74) Representative: Kreutzer, Ulrich
(86) International application number: PCT/JP2005/020903
(87) International publication number: WO 2006/075442

(56) References cited:
- EP-A1- 1 489 691
- JP-A- 6 292 315
- JP-A- 2002 171 653
- JP-U- 49 018 086

## Description

### Technical Field

The present invention relates to a method for assembling a connecting part of superconducting cables. More specifically, it relates to a method for assembling a connecting part of superconducting cables by which the outside diameter of the connecting part can be reduced.

### Background Art

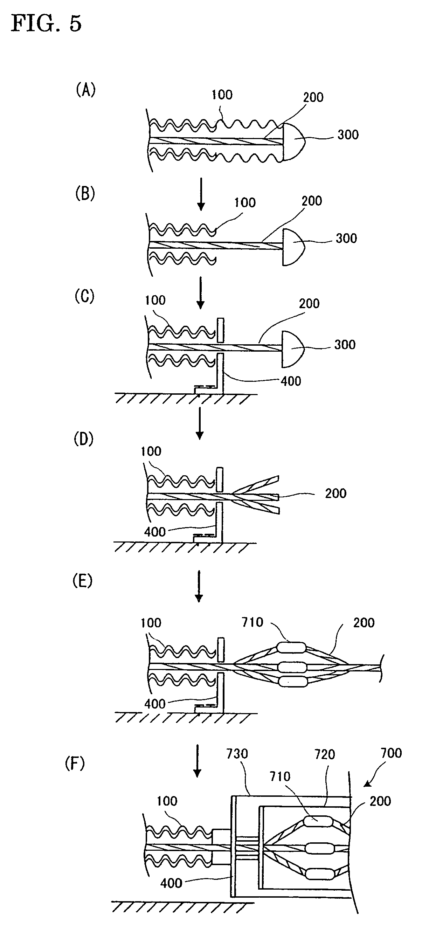

As a superconducting cable, there is known a structure in which three cable cores are twisted together and accommodated in a thermal insulating tube (for example, Patent Document 1 and Patent Document 2). These cores have, in order from the center, a former, a conductive layer, an insulating layer, a shielding layer, and a protective layer. Normally, in such a multicore superconducting cable, in order to absorb the thermal contraction during cooling by coolant, the stranding of the cable cores is slackened in advance. In the case where an intermediate connecting part is formed between such superconducting cables, the forming process is performed as shown in FIG. 5.

First, one of the superconducting cables to be connected is prepared (FIG. 5(A)). Next, one end of the thermal insulating tube 100 of this cable is cut, so as to expose the cable cores 200 from the end of the cut thermal insulating tube 100 by a length necessary for the forming work of the connecting part, with the position of a cap 300 attached to the ends of the cable cores 200 being fixed (FIG. 5 (B)). Next, the thermal insulating tube 100 of the superconducting cable is held in this state. Here, the thermal insulating tube 100 is fixed to the ground with a fixing jig 400 (FIG. 5 (C)).

The exposed cable cores 200 are untwisted, and the ends of the cable cores 200 are separated (FIG. 5 (D)). The same works are performed for the other cable to be connected. Connecting structures 710 like those described in Patent Document 3 are formed between the cable cores 200 abutted against each other (FIG. 5 (E)). In the formation of these connecting structures 710, the formers of the superconducting cables abutted against each other are covered with connecting sheaths, and then the connecting sheaths are compressed. After all connecting structures 710 of cores 200 have been formed, a coolant layer 720 covering all these connecting structures 710 is formed. In addition, a vacuumed vessel 730 is formed outside the coolant vessel 720. Thus, a connecting part 700 is formed (FIG. 5 (F)).

Patent Document 1: Japanese Unexamined Patent Application Publication No. 2003-249130 (FIG. 1)
Patent Document 2: Japanese Unexamined Patent Application Publication No. 2002-140944 (FIG. 2)
Patent Document 3: Japanese Utility Model Application No. 58725/1972 (Laid-open No. 18086/1974)

### Disclosure of Invention

### Problems to be solved by the Invention

The above-described method for assembling a connecting part has a problem where the outside diameter of the connecting part is large.

In order to form the connecting structures, it is necessary to untwist the cable cores and to separate the ends of the cable cores sufficiently to perform the forming work of the connecting structures. Therefore, the cable cores with connecting structures are spaced from each other. In addition, if compression is used for forming the connecting structures, the compressive parts are lengthened in the longitudinal direction with the compression. As a result, the sum of the length of the cable cores exposed between the ends of the thermal insulating tubes in the superconducting cables abutted against each other and the length of the connecting structures after compression is longer than the sum of those lengths before compression. For this reason, the exposed cable cores and the connecting structures are disposed, being slackened in the radius direction of the superconducting cables. This increases the outside diameter of the connecting part.

The present invention is made in consideration of the above-described circumstances. Its main object is to provide a method for forming a connecting part of superconducting cables by which the outside diameter of the connecting part can be reduced.

### Means for Solving the Problems

The present invention is a method for assembling a connecting part of superconducting cables, to form a connecting part at an end of a superconducting cable including a thermal insulating tube and a cable core accommodated therein. The method includes the following steps: the step of holding the thermal insulating tube with an end of the cable core exposed from the thermal insulating tube, at the end of the superconducting cable; the step of forming a connecting structure at the end of the cable core; and the step of pushing back the cable core into the thermal insulating tube by a predetermined length.

According to the method of the present invention, after the connecting structure is formed, the cable core is pushed back into the thermal insulating tube by a predetermined length. Therefore, the slack of the cable core exposed from the thermal insulating tube of the superconducting cable can be reduced. By this reduction in slack, the size in the radius direction of the connecting part can be reduced.

The method of the present invention will be described in detail.

### (Objects to be Connected)

The superconducting cables to which the method of the present invention is applied include all cables having a superconductor. Typically, they have a structure in which a cable core is accommodated in a thermal insulating tube. Normally, a thermal insulating tube has a double pipe structure of an inner pipe and an outer pipe. The space between both pipes is evacuated, and a thermal insulation such as a super insulation is disposed there. The cable core can have a structure including, for example, in order from the center, a former, a conductive layer, an insulating layer, a shielding layer, and a protective layer. The cable core may have a single core or a plurality of cores.

The superconducting cable to which the method of the present invention is applied may be a direct current cable or an alternating current cable.

### (Holding Process)

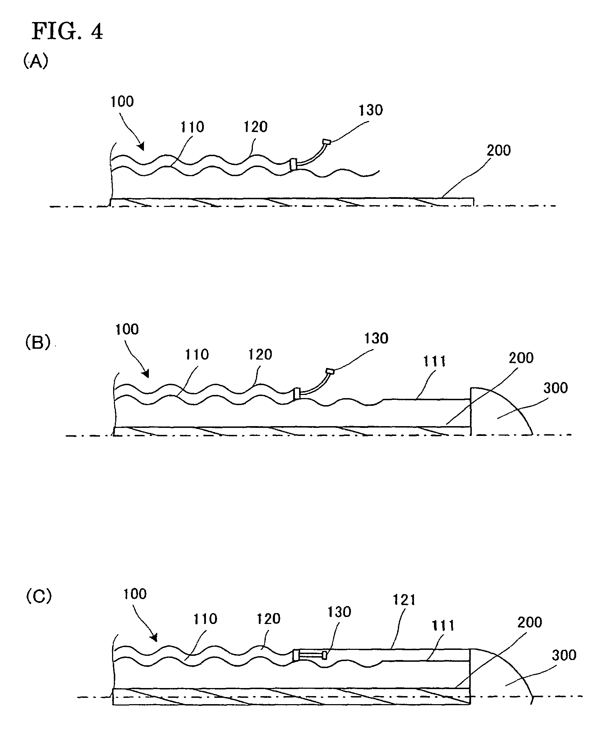

In such a superconducting cable, first, the thermal insulating tube is held with an end of the cable core exposed from the thermal insulating tube. In order to expose an end of the cable core from the thermal insulating tube, for example, an end of the thermal insulating tube is cut by a predetermined length. At this time, in the case where the thermal insulating tube has a double tube structure of an inner pipe and an outer pipe, it is preferable that the outer pipe be shorter than the inner pipe, and a vacuum be sealed at an end of the outer pipe. In the case of this structure, the vacuum sealing work at an end of the outer pipe can be easily performed. In addition, if the place to be cut is only an end of the inner pipe, the exposing work of the cable core can be performed without cutting the inner and outer pipes and breaking the vacuum of the thermal insulating tube. In the case of such a cable end, as shown in FIG. 4, the inner pipe 110 of the thermal insulating tube 100 is long, the outer pipe 120 thereof is short, and an evacuation port 130 is formed at an end of the outer pipe 120. Through this evacuation port 130, the space between the inner and outer pipes 110 and 120 is evacuated. Thereafter, a cap 300 is attached to the end of the cable core 200 extending farther than the inner pipe 110. Next, a straight inner pipe 111 and a straight outer pipe 121 are soldered between the end of the inner pipe 110 and the cap 300 and between the end of the outer pipe and the cap 300, respectively. In the case of a cable end having such a structure, if the thermal insulating tube from the cap 300 to the end of the outer pipe is cut, the vacuum of the thermal insulating tube 100 is not broken. The thermal insulating tube may have a structure in which the outer pipe is longer than the inner pipe, and a vacuum is sealed at an end of the inner pipe. Also in the case of this structure, if the place to be cut is only an end of the outer pipe, the exposing work of the cable core can be performed without cutting the inner and outer pipes and breaking the vacuum of the thermal insulating tube.

After the cable core is exposed from the thermal insulating tube, the thermal insulating tube is held in this state. By holding the thermal insulating tube, the thermal insulating tube is prevented from moving together with the cable core when the cable core is drawn out of the thermal insulating tube or pushed back into the thermal insulating tube as described below. For example, the thermal insulating tube is fixed, using an appropriate fixing jig, to the ground (or a building fixed to the ground, for example, the floor or the wall of a manhole).

### (Drawing Process)

Next, if necessary, the process of drawing the cable core out of the thermal insulating tube is performed. This drawing process is effective particularly in the case of a multicore cable including a plurality of cable cores twisted together. Normally, there is a slack in the stranding of a multicore cable, and therefore the clearance between the thermal insulating tube and a multicore cable is small. It is difficult to perform the process of returning the cable cores to the thermal insulating tube described below. When drawn out and stretched, the cable cores twisted together are tightened, and the stranding outside diameter is reduced. As a result, when the cable cores are pushed back into the thermal insulating tube, the reduced stranding outside diameter returns to the original diameter, and thereby the cable cores can be returned into the thermal insulating tube by a predetermined length. Therefore, in the case of a multicore cable, it is preferable to draw the cable cores out of the thermal insulating tube by a predetermined length. In the case of a single core cable, this drawing process need not be performed. Normally, in the case of a single core cable, the clearance between the thermal insulating tube and the cable core is comparatively large. Therefore, the cable core meanders in the thermal insulating tube, and thereby the below-described process of pushing back the cable core into the thermal insulating tube can be performed. Of course, it is possible to draw out the cable core of a single core cable so as to stretch the cable core meandering in the thermal insulating tube.

The predetermined length in this drawing is at least a length sufficient to reduce the slack of the cable core and the connecting structure located between the thermal insulating tubes of the superconducting cables abutted against each other. Particularly in the case where a compressing connection is used in the connecting structure, it is preferable that the predetermined length by which the cable core is drawn out in the drawing process be at least the increase in length by which the cable core is lengthened in the longitudinal direction of the cable core due to the compressing connection. By drawing out the cable core by this increase in length, the cable core can be easily pushed back into the thermal insulating tube in a subsequent process, and the slack generated by the increase in length due to compression can be eliminated. Of course, the cable core may be drawn out of the thermal insulating tube by a length exceeding the above increase in length.

This drawing process is preferably performed while the tensile load when the cable core is drawn out is measured. By measuring the tensile load, under how much load the cable core is drawn out can be checked.

### (Connecting Structure Forming Process)

Next, a connecting structure is formed at the end of the cable core. In the case where the above-described drawing process is performed, a connecting structure is formed with the cable core drawn out of the thermal insulating tube. The term "connecting structure" refers to a component of a connecting part formed for connecting a cable core to its counterpart. The term "connecting part" refers to the entire structure for connecting a superconducting cable to its counterpart. Normally, superconducting cable cores whose layers are exposed in a stepwise manner are abutted against each other, the formers and the conductive layers are connected using a sleeve, and a connecting structure is formed. At this time, the formers are connected by compressing the sleeve . Thereafter, an insulating tape is wound on the sleeve so as to form a reinforced insulating part. In the case of a single core cable, a coolant vessel is formed outside the reinforced insulating part. In the case of a multicore cable, a coolant vessel accommodating all reinforced insulating parts is formed. In addition, a vacuumed vessel is formed outside the coolant vessel so as to form a connecting part.

The connecting structure formed in the method of the present invention is typically a connecting structure in an intermediate connecting part for connecting superconducting cables. However, a connecting structure in a terminal connecting part is also included therein. In the case of an intermediate connecting part, cores may be fixed in a connecting box or disposed slidably depending on the thermal expansion or contraction in a connecting box.

### (Push Back Process)

Next, the cable core is pushed back into the thermal insulating tube. In the case where the drawing process is performed using an appropriate strainer such as a jack, this push back process is realized by releasing the tension. In the case of a single core cable, there is only a single core in the thermal insulating tube, and the clearance therebetween is comparatively large. Therefore, after a connecting structure is formed, if the cable core is pushed into the thermal insulating tube, the cable core meanders in the thermal insulating tube, and thereby the cable core can be pushed back by a predetermined length. Even in the case of a multicore cable, such as a two-core or three-core cable, in which a plurality of cable cores are twisted together and accommodated in a thermal insulating tube, if the clearance between the thermal insulating tube and the cable cores twisted together is comparatively large, the cable cores can be returned into the thermal insulating tube by a predetermined length. However, normally, this clearance is not sufficient, and it is actually difficult to return the cable core into the thermal insulating tube by a predetermined length. In this case, it is preferable to draw the cable cores twisted together out of the thermal insulating tube by a predetermined length in advance. Since there is generally a certain amount of slack in the cable cores twisted together, when drawn out and stretched, the cable cores twisted together are tightened, and the stranding outside diameter is reduced. When the cable cores are returned into the thermal insulating tube, the reduced stranding outside diameter returns to the original diameter, and thereby the cable cores can be returned into the thermal insulating tube by a predetermined length.

The predetermined length in this push back process is at least a length sufficient to reduce the slack of the cable core and the connecting structure located between the thermal insulating tubes of the superconducting cables abutted against each other. Particularly in the case where a compressing connection is used in the connecting structure, it is preferable that the predetermined length by which the cable core is pushed back in the push back process be at least the increase in length by which the cable core is lengthened in the longitudinal direction of the cable core due to the compressing connection. By pushing back the cable core by this increase in length, the slack generated by the increase in length due to compression can be eliminated. In the case where the cable core is drawn out by a length larger than or equal to this increase in length, it is preferable that the length by which the cable core is pushed back be equal to the length by which the cable core is drawn out.

This push back process is preferably performed while the pressing load when the cable core is returned is measured. By measuring the pressing load, under how much load the cable core is pushed back can be checked.

### (Drawing mechanism and Push Back Mechanism)

The above-described drawing of the cable core out of the thermal insulating tube or pushing back into the thermal insulating tube can be performed using an appropriate strainer, such as a jack or a winch, or a driving mechanism using a screw. In this case, it is preferable to grasp the cable core with a grasping tool, to draw the grasping tool, and to thereby draw the cable core out of the thermal insulating tube. Particularly in the case where a plurality of cores are grasped, by using a grasping tool capable of holding a plurality of cores together, drawing or pushing back can be performed without displacing the cores relative to each other.

It is preferable that this grasping tool include an elastic part fitted on the outer periphery of the cable core, and a fastening tool grasping the elastic part. This elastic part is, for example, a cylindrical elastic part having a fitting hole fitting the outline of the plurality of cores. This elastic part preferably has a cut in the longitudinal direction so as to be easily fitted on the outer periphery of the core. In consideration of fittability, such an elastic part is preferably formed of a highly-flexible material such as rubber.

The fastening tool fastens the elastic part and thereby contributes to obtaining a sufficient grasping force. The fastening tool is, for example, a pair of semicylindrical division pieces fitted together so as to form a cylinder. On both side edges of each division piece are provided flat-plate-like connecting plates extending outward in the radius direction. By fitting the division pieces together so that they face each other, passing bolts through the connecting plates, and tightening nuts, the cable core can be firmly grasped by the elastic part between the cable core and the fastening tool. Between the connecting plates facing each other, springs may be disposed so that elastic force is applied between the connecting plates. In addition, in order to prevent the elastic part from being displaced in the longitudinal direction when the elastic part is fastened with the fastening tool, stoppers may be provided in the elastic part. Specifically, the stoppers are, for example, large diameter portions provided at both ends of the elastic part. The diameter of the large diameter portions is larger than that of the fastening tool. The large diameter portions are located at both ends of the fastening tool when the elastic part is grasped by the fastening tool.

A drawing mechanism (push back mechanism) using the above-described grasping tool is preferably capable of driving the fastening tool along the axial direction. If the fastening tool can be moved in the axial direction, a tensile force (pressing force) along the axial direction can be exerted on the grasped cable core. Specifically, such a mechanism is, for example, a driving mechanism using a screw. For example, a protrusion along the axial direction is provided on the outer periphery of the fastening tool, and a female screw hole is provided in this protrusion. A ball screw is screwed into this insertion hole. An end of the ball screw is held by the fixing jig used for holding the thermal insulating tube. In a driving mechanism having this structure, by rotating the ball screw, the grasping tool can be moved back and forth in the axial direction, and the grasped cable core can be drawn out of and pushed back into the thermal insulating tube.

Instead of a ball screw, a rod may be used. This rod is inserted into the insertion hole provided in the protrusion of the fastening tool so that the fastening tool can slide along the rod. For example, a wire is attached to this fastening tool. The wire is taken up, for example, with a winch, and thereby the fastening tool is moved back and forth along the rod. Thus, the cable core grasped by the fastening tool can be drawn out of and pushed back into the thermal insulating tube.

### Advantages

The method of the present invention has the following advantages.

(1) In the place where a connecting structure of superconducting cables is formed, by returning the cable core into the thermal insulating tube by a predetermined length, the slack of the cable core exposed from the thermal insulating tube of a superconducting cable can be reduced. By the reduction of this slack, the size in the radius direction of the connecting part can be reduced.

(2) By drawing the cable core out of the thermal insulating tube by a predetermined length in advance before a connecting structure is formed, the cable core can be easily returned into the thermal insulating tube in a subsequent process. In particular, when the predetermined length by which the cable core is drawn out is at least the increase in length by which the cable core is lengthened in the longitudinal direction of the cable core due to the compressing connection, the cable core can be easily returned to the thermal insulating tube by this increase in length in a subsequent process.

(3) In the case where a compressing connection is used for forming a connecting structure, when the predetermined length by which the cable core is returned in the returning process is at least the increase in length by which the cable core is lengthened in the longitudinal direction of the cable core due to the compressing connection, the slack generated by this increase in length can be eliminated.

(4) When the cable core is drawn out of the thermal insulating tube or pushed back to the thermal insulating tube, by grasping the cable core with a grasping tool and drawing (pressing) this grasping tool, the cable core can be surely drawn out of (pushed back into) the thermal insulating tube. In particular, in the case of a plurality of cable cores, the cores can be drawn out of the thermal insulating tube (pushed back to the thermal insulating tube) together.

(5) In the case where a grasping tool is used for drawing the cable core out of the thermal insulating tube (pushing back the cable core into the thermal insulating tube), when the grasping tool includes an elastic part fitted on the outer periphery of the cable core and a fastening tool grasping this elastic part, the cable core can be firmly grasped and moved without being damaged.

(6) In at least one of the push back process and the drawing process, by measuring the load during the drawing (pushing back) of the cable core, under how much load the cable core is drawn (pushed back) can be checked.

(7) In the case of a plurality of cable cores twisted together, by using the tightening of the slack of the stranding, the superconducting cable can be easily drawn out of or pushed back to the thermal insulating tube.

### Brief Description of the Drawings

FIG. 1 is a process explaining view showing the assembling method of the present invention.
FIG. 2 is a schematic perspective view of an elastic part used in the method of the present invention.
FIG. 3 is a schematic perspective view of a fastening part used in the method of the present invention.
FIG. 4 is a schematic partial vertical sectional view of an end of a superconducting cable used in the method of the present invention.
FIG. 5 is a process explaining view showing a conventional assembling method.

### Reference Numerals

- 100: thermal insulating tube
- 110: inner pipe
- 120: outer pipe
- 130: evacuation port
- 111: straight inner pipe
- 121: straight outer pipe
- 200: cable core
- 300: cap
- 400: fixing jig
- 410: vertical piece
- 420: horizontal piece
- 500: grasping tool
- 510: elastic part
- 511: grasping hole
- 512: cut
- 520: fastening tool
- 521: division piece
- 522: connecting piece
- 523: through hole
- 524: protrusion
- 525: insertion hole
- 530: slide shaft
- 600: wire
- 700: connecting part
- 710: connecting structure
- 720: coolant vessel
- 730: vacuumed vessel

### Best Mode for Carrying Out the Invention

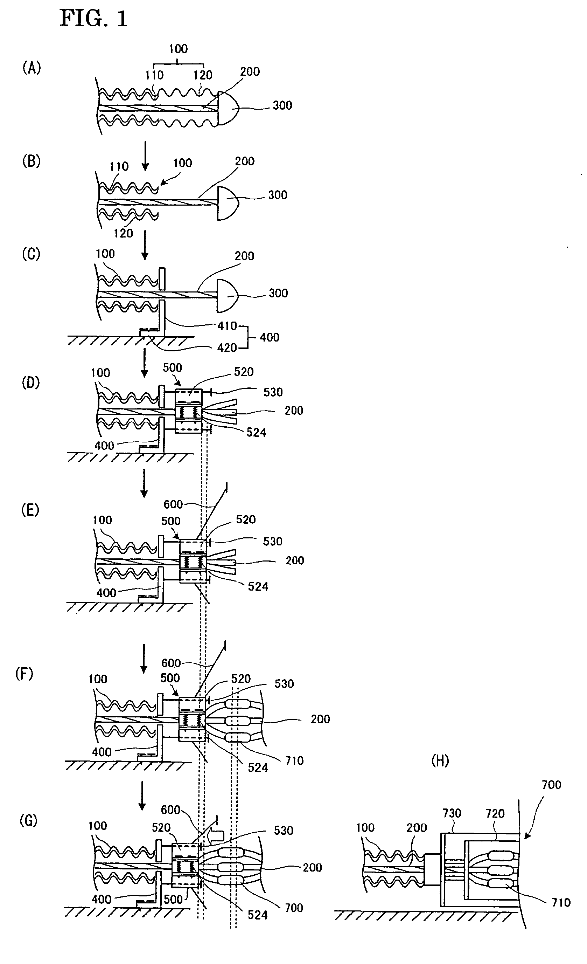

An embodiment of the present invention will now be described with reference to FIG. 1. Here, for example, the case where an intermediate connecting part is formed between three-core superconducting cables each including a thermal insulating tube and three cable cores twisted together and accommodated in the thermal insulating tube.

As shown in FIG. 1 (A), one of the superconducting cables to be connected is prepared. The thermal insulating tube 100 of this superconducting cable has a double tube structure of an inner pipe 110 and an outer pipe 120. The outer pipe 120 is longer than the inner pipe 110. The space between the inner and outer pipes 110 and 120 is sealed at an end of the inner pipe 110. The space between both pipes 110 and 120 is a vacuum. Each cable core 200 has, in order from the center, a former, a conductive layer, an insulating layer, a shielding layer, and a protective layer. The three cable cores 200 twisted together are slackened so that the contraction due to cooling can be absorbed during the operation of the superconducting cable. A cap 300 is attached to the ends of the thermal insulating tube 100 and the cable cores 200.

Next, as shown in FIG. 1 (B), the end of the thermal insulating tube 100 is cut so as to expose the cable cores 200. In this embodiment, only the part of the outer pipe 120 extending farther than the inner pipe 110 is cut so as not to break the vacuum of the thermal insulating tube 100.

Next, as shown in FIG. 1 (C), the end of the thermal insulating tube 100 is held on the ground with a fixing jig 400. The fixing jig 400 used in this embodiment has a vertical piece 410 and a horizontal piece 420. The vertical piece 410 holds the thermal insulating tube 100 and has a groove in which the cable cores 200 are fitted. The horizontal piece 420 supports the vertical piece 410 on the ground.

Next, as shown in FIG. 1 (D), the cap 300 at the ends of the cable cores is detached, and then the ends of the cable cores 200 are untwisted and separated sufficiently to form connecting structures. Next, a grasping tool 500 is fitted to a not untwisted part of the cable cores 200. This grasping tool 500 is a tool used when the cable cores 200 are drawn out of the thermal insulating tube 100 or pushed back to the thermal insulating tube 100.

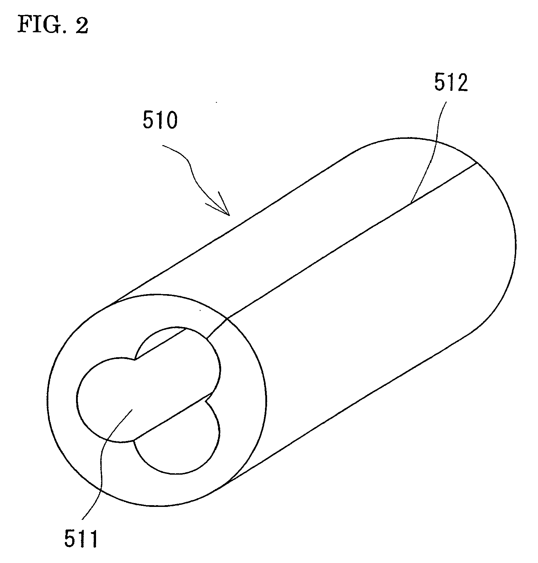

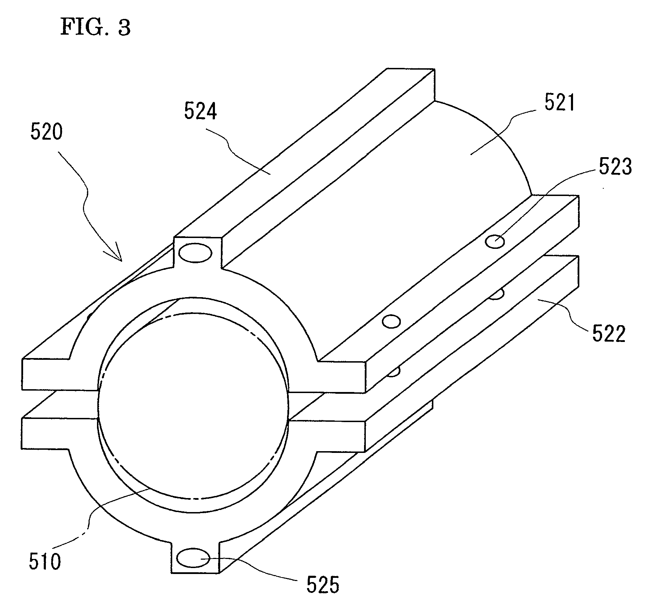

This grasping tool 500 includes an elastic part shown in FIG. 2 and a fastening tool 520 shown in FIG. 3. The outer periphery of the elastic part 510 is shaped in a cylindrical surface. The elastic part 510 has a grasping hole 511 whose inner periphery fits the outline of the cable cores twisted together. In this embodiment, the elastic part 510 is formed of chloroprene rubber. In addition, this elastic part 510 has a cut 512 formed so as to extend from the outer periphery to the inner periphery and along the axial direction. When the elastic part 510 is fitted to the cable cores, this cut 512 is opened, and thereby the elastic part 510 can be fitted to the cable cores from the side.

The fastening tool 520 includes semicylindrical division pieces 521 fitted together and is configured to fasten the elastic part 510 from the outer periphery. Each division piece 521 of this fastening tool 520 has rectangular plate-like connecting pieces 522 formed on both side edges thereof and extending outward in the radius direction. Each connecting piece 522 has bolt through holes 523 formed therein. By fitting both division pieces 521 together so that the connecting pieces 522 face each other, inserting bolts into the through holes 523, and tightening nuts, the three cable cores 510 can be fastened together without being damaged and can be firmly held. In this embodiment, between the connecting pieces 523 facing each other, the bolts are received in compression springs 524, whose elastic force counters the fastening force so as not to damage the cable cores 510.

In addition, each division piece 521 has a protrusion 524 formed at a position of a right angle from the connecting pieces 522. The protrusion 524 has an insertion hole 525 formed therein. Trough this insertion hole 525 is passed a slide shaft 530 (see FIG. 1 (D)). By sliding the fastening tool 520 along the shaft, the held cable cores 510 can be moved relative to the thermal insulating tube 100 in the axial direction.

In this embodiment, as shown in FIG. 1 (D), one slide shaft is passed through each insertion hole, and one end of the slide shaft 530 is screwed to the fixing jig 400. At the other end of the slide shaft 530 is formed a stopper. Specifically, the other end of the slide shaft 530 partly has a larger diameter so as to prevent the fastening tool 520 from being removed from the slide shaft 530.

In this state, as shown in FIG. 1 (E), a wire 600 is attached to the fastening tool 520, and the wire 600 is taken up with a winch (not shown). With this taking up, the fastening tool 520 grasping the cable cores 200 with the elastic part therebetween moves to the other ends of the slide shafts 530 and is stopped by the stoppers. By further taking up the wire 600, the cable cores 200 are drawn out of the thermal insulating tube 100 by a predetermined length. At this time, the tensile force exerted on the wire 600 can be measured using a load cell, for example.

In this embodiment, when the below-described connecting structures 710 are formed, the cable cores 200 are drawn out of the thermal insulating tube 100 by a length slightly larger than the length by which the connecting sleeves are lengthened due to the compression. Due to this drawing, the plurality of cable cores 200 loosely twisted together is tightened, the outside diameter is thereby reduced, and the clearance between the cable cores 200 and the inner periphery of the thermal insulating tube 100 is increased. The drawn-out cable cores 200 are held in this position, and connecting structures 710 are formed.

The above-described processes of FIG. 1 (A) to FIG. 1 (E) are also performed for the other superconducting cable to be connected. As shown in FIG. 1 (F), the cable cores of one superconducting cable and the cable core of the other superconducting cable are connected via connecting structures 710. In each connecting structure 710, formers and conductive layers abutted against each other are covered with a connecting sleeve. The formers are connected by compressing the connecting sleeve. The conductive layers are connected by solder interposed between the conductive layers and the connecting sleeve. After this compressing connection via the connecting sleeve is completed, an insulating tape is wound around the compressing connection part to form a reinforced insulating layer. FIG. 1 (F) shows a state in which these reinforced insulating layers are formed.

Next, as shown in FIG. 1 (G), the drawn-out cable cores are pushed back into the thermal insulating tube. In this embodiment, the tension of the wire 600 attached to the fastening tool 520 is released, and in this state, the slide shafts 530 are screwed into the fixing jig 400. That is to say, the slide shafts 530 themselves are moved to the left in the figure, and with this movement, the fastening tool 520 is also moved to the left in the figure. Due to this movement, the drawn-out cable cores 200 are pushed back into the thermal insulating tube 100. In this embodiment, the slide shafts 530, which are parallel to the fastening tool 520, are screwed into the fixing jig 400, and thereby a pressing force along the axial direction can be exerted on the cable cores 200. By exerting this pressing force, the twist of the cable cores 200 is slackened, and thereby the cable cores 200 twisted together can be easily pushed back into the thermal insulating tube 100. The distance by which the cable cores 200 are pushed back is equal to the above distance by which the cable cores 200 are drawn out. This pushing back reduces the slack of the cable cores 200 and the connecting structures 710 disposed between the ends of the thermal insulating tubes of both superconducting cables abutted against each other.

After the cable cores 200 have been pushed back into the thermal insulating tube 100, as shown in FIG. 1 (H), a coolant vessel 720 accommodating the connecting structures 710 of the three cores together is formed. In addition, a vacuumed vessel 730 is formed outside the coolant vessel 720. Thus, the formation of a connecting part 700 is completed.

As described above, the cable cores are drawn out by a predetermined length, and after the formation of connecting structures, the cable cores are pushed back into the thermal insulating tube. This reduces the slack of the cable cores and the connecting structures disposed between the ends of the thermal insulating tubes, and reduces the distance between the connecting structures in the radius direction. Therefore, the outside diameter of the connecting structures can be reduced.

In the above-described embodiment, if the straight part of the superconducting cable is about 3 m, the cable cores can be pushed into the thermal insulating tube by about 10 mm on one side of the connecting structures by applying an axial power of about 300 to 500 kgf.

### Industrial Applicability

The assembling method of the present invention is suitable for forming a connecting part of superconducting cables.

## Claims

1. A method for assembling a connecting part of superconducting cables, to form a connecting part (700) at an end of a superconducting cable including a thermal insulating tube (100) and a cable core (200) accommodated therein, **characterized in that** the method comprises the steps of:
holding the thermal insulating tube (100) with an end of the cable core (200) exposed from the thermal insulating tube (100), at the end of the superconducting cable; subsequently
forming a connecting structure (710) at the end of the cable core (200); and then
pushing back the cable core (200) into the thermal insulating tube (100) by a predetermined length.

2. The method for assembling a connecting part of superconducting cables according to Claim 1, further comprising, between the step of holding the thermal insulating tube (100) and the step of forming a connecting structure (710), the step of drawing the cable core (200) out of the thermal insulating tube (100) by a predetermined length.

3. The method for assembling a connecting part of superconducting cables according to Claim 1, wherein a compressing connection is used in the step of forming a connecting structure (710), and the predetermined length by which the cable core (200) is returned in the push back step is at least a length by which the cable core (200) is lengthened in the longitudinal direction of the cable core (200) due to the compressing connection.

4. The method for assembling a connecting part of superconducting cables according to Claim 2, wherein a compressing connection is used in the step of forming a connecting structure (710), and the predetermined length by which the cable core (200) is drawn out in the drawing step is at least a length by which the cable core (200) is lengthened in the longitudinal direction of the cable core due (200) to the compressing connection.

5. The method for assembling a connecting part of superconducting cables according to Claim 1, wherein, in the push back step, the cable core (200) is grasped by a grasping tool (500), the grasping tool (500) is pressed, and thereby the cable core (200) is returned to the thermal insulating tube (100).

6. The method for assembling a connecting part of superconducting cables according to Claim 2, wherein, in the drawing step, the cable core (200) is grasped by a grasping tool (500), the grasping tool (500) is drawn, and thereby the cable core (200) is drawn out of the thermal insulating tube (100).

7. The method for assembling a connecting part of superconducting cables according to Claim 5 or 6, wherein the grasping tool (500) includes an elastic part (510) fitted on the outer periphery of the cable core (200) and a fastening tool (520) grasping the elastic part (510).

8. The method for assembling a connecting part of superconducting cables according to Claim 1, wherein the push back step is performed while the pressing load when the cable core (200) is pushed back is measured.

9. The method for assembling a connecting part of superconducting cables according to Claim 2, wherein, the drawing step is performed while the tensile load when the cable core (200) is drawn out is measured.

10. The method for assembling a connecting part of superconducting cables according to Claim 2, wherein the cable core (200) includes a plurality of cores twisted together.

## Patentansprüche

1. Verfahren zum Zusammenbau eines Verbindungsteils von supraleitenden Kabeln, um ein Verbindungsteil (700) an einem Ende eines supraleitenden Kabels zu bilden, welches ein thermisch isolierendes Rohr (100) und einen darin untergebrachten Kabelkern (200) umfaßt, **dadurch gekennzeichnet, daß** das Verfahren folgende Schritte umfaßt:
Halten des thermisch isolierenden Rohres (100), wobei ein Ende des Kabelkerns (200) aus dem thermisch isolierenden Rohr (100) heraus freiliegt, an dem Ende des supraleitenden Kabels, anschließend
Bilden einer Verbindungskonstruktion (710) an dem Ende des Kabelkerns (200) und dann
Zurückschieben des Kabelkerns (200) um eine vorbestimmte Länge in das thermisch isolierende Rohr (100).

2. Verfahren zum Zusammenbau eines Verbindungsteils von supraleitenden Kabeln nach Anspruch 1, ferner umfassend, zwischen dem Schritt des Haltens des thermisch isolierenden Rohres (100) und dem Schritt des Bildens einer Verbindungskonstruktion (710), den Schritt des Herausziehens des Kabelkerns (200) aus dem thermisch isolierenden Rohr (100) um eine vobestimmte Länge.

3. Verfahren zum Zusammenbau eines Verbindungsteils von supraleitenden Kabeln nach Anspruch 1, wobei in dem Schritt des Bildens einer Verbindungskonstruktion (710) eine Kompressionsverbindung verwendet wird und wobei die vorbestimmte Länge, um welche der Kabelkern (200) in dem Schritt des Zurückschiebens zurückgeführt wird, mindestens eine Länge ist, um welche der Kabelkern (200) in der Längsrichtung des Kabelkerns (200) aufgrund der Kompressionsverbindung verlängert wird.

4. Verfahren zum Zusammenbau eines Verbindungsteils von supraleitenden Kabeln nach Anspruch 2, wobei in dem Schritt des Bildens einer Verbindungskonstruktion (710) eine Kompressionsverbindung verwendet wird und wobei die vorbestimmte Länge, um welche der Kabelkern (200) in dem Schritt des Herausziehens herausgezogen wird, mindestens eine Länge ist, um welche der Kabelkern (200) in der Längsrichtung des Kabelkerns (200) aufgrund der Kompressionsverbindung verlängert wird.

5. Verfahren zum Zusammenbau eines Verbindungsteils von supraleitenden Kabeln nach Anspruch 1, wobei in dem Schritt des Zurückschiebens der Kabelkern (200) mittels eines Greifwerkzeugs (500) gegriffen wird, das Greifwerkzeug (500) gedrückt wird und der Kabelkern (200) **dadurch** in das thermisch isolierende Rohr (100) rückgeführt wird.

6. Verfahren zum Zusammenbau eines Verbindungsteils von supraleitenden Kabeln nach Anspruch 2, wobei in dem Schritt des Herausziehens der Kabelkern (200) mittels eines Greifwerkzeugs (500) gegriffen wird, das Greifwerkzeug (500) gezogen wird und der Kabelkern (200) **dadurch** aus dem thermisch isolierenden Rohr (100) herausgezogen wird.

7. Verfahren zum Zusammenbau eines Verbindungsteils von supraleitenden Kabeln nach Anspruch 5 oder 6, wobei das Greifwerkzeug (500) ein elastisches Teil (510), das an dem Außenumfang des Kabelkerns (200) angeordnet wird, und ein Befestigungswerkzeug (520), welches das elastische Teil (510) greift, umfaßt.

8. Verfahren zum Zusammenbau eines Verbindungsteils von supraleitenden Kabeln nach Anspruch 1, wobei der Schritt des Zurückschiebens durchgeführt wird, während die Drucklast beim Zurückschieben des Kabelkerns (200) gemessen wird.

9. Verfahren zum Zusammenbau eines Verbindungsteils von supraleitenden Kabeln nach Anspruch 2, wobei der Schritt des Herausziehens durchgeführt wird, während die Zuglast bei Herausziehen des Kabelkerns (200) gemessen wird.

10. Verfahren zum Zusammenbau eines Verbindungsteils von supraleitenden Kabeln nach Anspruch 2, wobei der Kabelkern (200) mehrere miteinander verdrillte Kerne umfaßt.

## Revendications

1. Procédé d'assemblage d'une partie de raccordement de câbles supraconducteurs, afin de former une partie de raccordement (700) à une extrémité d'un câble supraconducteur comprenant un tube d'isolation thermique (100) et une âme de câble (200) qui y est reçue, **caractérisé en ce que** le procédé comporte les étapes consistant à :
maintenir le tube d'isolation thermique (100) avec une extrémité de l'âme de câble (200) exposée par rapport au tube d'isolation thermique (100), à l'extrémité du câble supraconducteur ; puis
former une structure de raccordement (710) à l'extrémité de l'âme de câble (200) ; et ensuite
repousser l'âme de câble (200) dans le tube d'isolation thermique (100) sur une longueur prédéterminée.

2. Procédé d'assemblage d'une partie de raccordement de câbles supraconducteurs selon la revendication 1, comportant en outre, entre l'étape de maintien du tube d'isolation thermique (100) et l'étape de formation d'une structure de raccordement (710), l'étape de sortie de l'âme de câble (200) hors du tube d'isolation thermique (100) sur une longueur prédéterminée.

3. Procédé d'assemblage d'une partie de raccordement de câbles supraconducteurs selon la revendication 1, selon lequel un raccordement à compression est utilisé dans l'étape de formation d'une structure de raccordement (710), et la longueur prédéterminée sur laquelle l'âme de câble (200) est retournée dans l'étape de poussée est au moins une longueur sur laquelle l'âme de câble (200) est allongée dans la direction longitudinale de l'âme de câble (200) du fait du raccordement à compression.

4. Procédé d'assemblage d'une partie de raccordement de câbles supraconducteurs selon la revendication 2, selon lequel un raccordement à compression est utilisé dans l'étape de formation d'une structure de raccordement (710), et la longueur prédéterminée sur laquelle l'âme de câble (200) est tirée dans l'étape de sortie est au moins une longueur sur laquelle l'âme de câble (200) est allongée dans la direction longitudinale de l'âme de câble (200) du fait du raccordement à compression.

5. Procédé d'assemblage d'une partie de raccordement de câbles supraconducteurs selon la revendication 1, selon lequel, dans l'étape de poussée, l'âme de câble (200) est saisie par un outil de saisie (500), l'outil de saisie (500) est poussé, et l'âme de câble (200) est ainsi retournée dans le tube d'isolation thermique (100).

6. Procédé d'assemblage d'une partie de raccordement de câbles supraconducteurs selon la revendication 2, selon lequel, dans l'étape de sortie, l'âme de câble (200) est saisie par un outil de saisie (500), l'outil de saisie (500) est tiré, et l'âme de câble (200) est ainsi sortie du tube d'isolation thermique (100).

7. Procédé d'assemblage d'une partie de raccordement de câbles supraconducteurs selon la revendication 5 ou 6, selon lequel l'outil de saisie (500) comprend une partie élastique (510) montée sur la périphérie externe de l'âme de câble (200) et un outil de fixation (520) qui saisit la partie élastique (510).

8. Procédé d'assemblage d'une partie de raccordement de câbles supraconducteurs selon la revendication 1, selon lequel l'étape de poussée est réalisée alors que la charge de pression quand l'âme de câble (200) est repoussée est mesurée.

9. Procédé d'assemblage d'une partie de raccordement de câbles supraconducteurs selon la revendication 2, selon lequel l'étape de sortie est réalisée alors que la charge de tension quand l'âme de câble (200) est sortie est mesurée.

10. Procédé d'assemblage d'une partie de raccordement de câbles supraconducteurs selon la revendication 2, selon lequel l'âme de câble (200) comprend une pluralité d'âmes torsadées ensemble.
